# EUROPÄISCHE PATENTANMELDUNG

(11) **EP 0 972 756 A1**
(43) Veröffentlichungstag der Anmeldung: **19.01.2000**
(21) Anmeldenummer: 98113033.9
(22) Anmeldetag: 14.07.1998
(51) Int. Cl.: C05G 3/00, C05D 3/02

(54) **Körniger Branntkalk**

(71) Anmelder: Müller, Winfried, 36137 Grossenlüder-Müs (DE)
(72) Erfinder: Müller, Winfried, 36137 Grossenlüder-Müs (DE)
(74) Vertreter: von Creytz, Dietrich, Dipl.-Phys.

(57) **Zusammenfassung**

Es werden ein körniger Branntkalk und ein Verfahren zur Oberflächenbehandlung des Branntkalks beschrieben. Um eine Staubentwicklung infolge Abriebs bei mechanischen Vorgängen zu minimieren, wird der Branntkalk einer Sprühbehandlung mit pflanzlichen Ölen unterzogen. Das Öl vermindert den Abrieb drastisch, ohne die Wirksamkeit des Kalks, gemessen an der Umsetzungsintensität nach Wasserzutritt, zu beeinträchtigen.

## Beschreibung

Die Erfindung betrifft einen körnigen Branntkalk. Sie betrifft ferner ein Verfahren zum Herstellen des Branntkalks.

Körniger Branntkalk ist ein in der Landwirtschaft eingesetzter Kalkdünger. Nach dem in Deutschland geltenden Düngemittelrecht darf ein Branntkalk als körnig bezeichnet werden, wenn sein Siebdurchgang bei 0,4 mm kleiner als 5 % und bei 6,3 mm größer als 97 % ist. Man verwendet Branntkalk in körniger Form, um die Staubentwicklung beim Ausbringen des Düngers zu minimieren. In der Praxis führen allerdings bereits die Feinanteile kleiner als 0,4 mm schon bei einem zusätzlichen Anteil von weit unter 5 % zu einem merklichen Stauben. Diese Staubentwicklung kann durch den bei mechanischen Vorgängen, wie Laden, Fördern und Streuen, auftretenden Abrieb erheblich verstärkt werden. Besonders stark ist der Abrieb, der in Form von feinem Staub oft zu Belästigungen führen kann, bei weichgebrannten Produkten.

Der Erfindung liegt die Aufgabe zugrunde, den bisher bei Transport und Ausbringung auftretenden Abrieb körnigen Branntkalks auf ein betreffend die Staubentwicklung minimales, insbesondere praktisch nicht mehr störendes, Maß zu vermindern. ohne jedoch die Wirksamkeit des Kalks, wie etwa seine Reaktionsfähigkeit, speziell betreffend die Umsetzungsintensität nach Wasserzutritt, zu beeinträchtigen.

Die erfindungsgemäße Lösung ist für den körnigen Branntkalk gekennzeichnet durch ein auf die Oberfläche der Kalkkörner aufgebrachtes pflanzliches Öl. Die Lösung besteht für das Verfahren zum Herstellen des Branntkalks darin, daß die Körner des Branntkalks mit pflanzlichem Öl besprüht werden. Einige Verbesserungen weiterer Ausgestaltungen der Erfindung werden in den Unteransprüchen beschrieben.

Vorzugsweise werden vorhandene Feinteile dadurch an größere Partikel gebunden, daß die Körner des Branntkalks mit dem Öl besprüht werden und das Material dabei gut durchmischt wird. Durch die Erfindung wird ein körniger Branntkalk geschaffen, der - wie unten im einzelnen begründet wird - bei den üblichen mechanischen Vorgängen, wie Laden, Fördern, Streuen, einen gegenüber dem unbehandelten Kalk zumindest stark verminderten Staubabrieb zeigt. Diese Erfolge werden erreicht, durch die erfindungsgemäße Sprühbehandlung mit den pflanzlichen Ölen, z. B. Rapsöl, Sonnenblumenöl oder Leinöl. Diese auch als organische oder natürliche Öle zu bezeichnenden Pflanzenöle vermindern den Staubabrieb drastisch, ohne die in der Landwirtschaft erstrebte Wirksamkeit des Kalks merklich zu beeinträchtigen oder die Umwelt zu schädigen. Das gilt vor allem, wenn geringe Olmengen eingesetzt werden. Bevorzugte Olmengen liegen im Rahmen der Erfindung in der Größenordnung von 0,1 - 2,5 M-% Öl, vorzugsweise kommen etwa 0,2 - 2,0 M-% Öl in Frage. Derart geringe Mengen organischer Öle sind weder schädlich für den Boden noch beeinträchtigen sie die landwirtschaftliche Wirksamkeit des Kalkes. Es hat sich jedoch in der Praxis gezeigt, daß diese geringen Mengen an Öl ausreichen, nicht nur die gesamten im Branntkalk (zulässig) verbleibenden Feinanteile zu binden, sondern auch den bisher erst bei Transport und Ausbringung entstehenden Abrieb auf ein unmerkliches bzw. nicht mehr störendes Maß zu reduzieren.

Erfindungsgemäß wird unter dem Begriff "pflanzliches Öl" sowohl ein reines Öl als auch eine Ölmischung verstanden. Auch die aufgebrachte Ölmenge kann in den vorgenannten Bereichen von mindestens etwa 0,1 M-% Öl - vorzugsweise etwa 2,0 M-% Öl - stark variiert werden. Der körnige Branntkalk wird durch eine Oberflächenbehandlung so modifiziert wird, daß eine unerwünschte Staubentwicklung beim Ausbringen unterbleibt, ohne daß die erwünschten Eigenschaften des Branntkalks beeinflußt werden. Beim Aufbringen des Öls auf den Branntkalk durch Besprühen wird der körnige Kalk vorzugsweise ständig gemischt.

### Versuchsaufbau

### Besprühen des Branntkalks

In einem Freifallmischer (Rauminhalt 150 l) wurde körniger Branntkalk unter ständigem Mischen mit unterschiedlichen Mengen eines pflanzlichen Öls, hier Rapsöl, besprüht. Das Öl wurde an einer 2-Stoff-Düse mit Druckluft zerstäubt.

### Siebung

In einem Siebturm wurden Proben von unbehandeltem körnigen Branntkalk und von (wie oben angegeben) mit Öl behandeltem körnigen Branntkalk untersucht. Die Siebdurchgänge verschiedener Siebe wurden in Abhängigkeit der Siebdauer bestimmt. Dazu wurden im Siebturm Siebe mit den Maschenbreiten 0,4 mm/0,1 mm/2 mm/4 mm/6,3 mm eingespannt. Um das Probengut während der Siebung mechanisch zu belasten, wurden je vier Hartgummibälle auf jedes Sieb aufgelegt.

### Bestimmung der Reaktionsfähigkeit

Die Reaktionsfähigkeit des mit Öl behandelten Kalks - gemessen an der Umsetzungsintensität nach Wasserzutritt - wurde bestimmt. Es wurden Naßlöschkurven von unbehandelten und mit Öl behandelten Proben aufgenommen.

### Versuchsergebnisse

### Bindung der Feinanteile durch das Öl

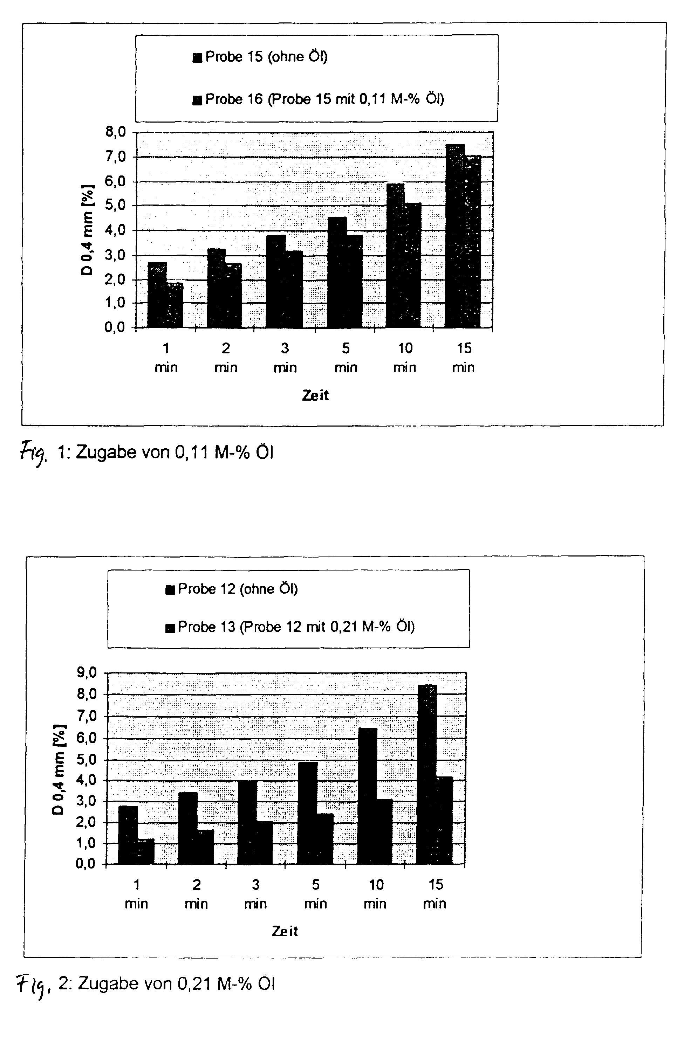

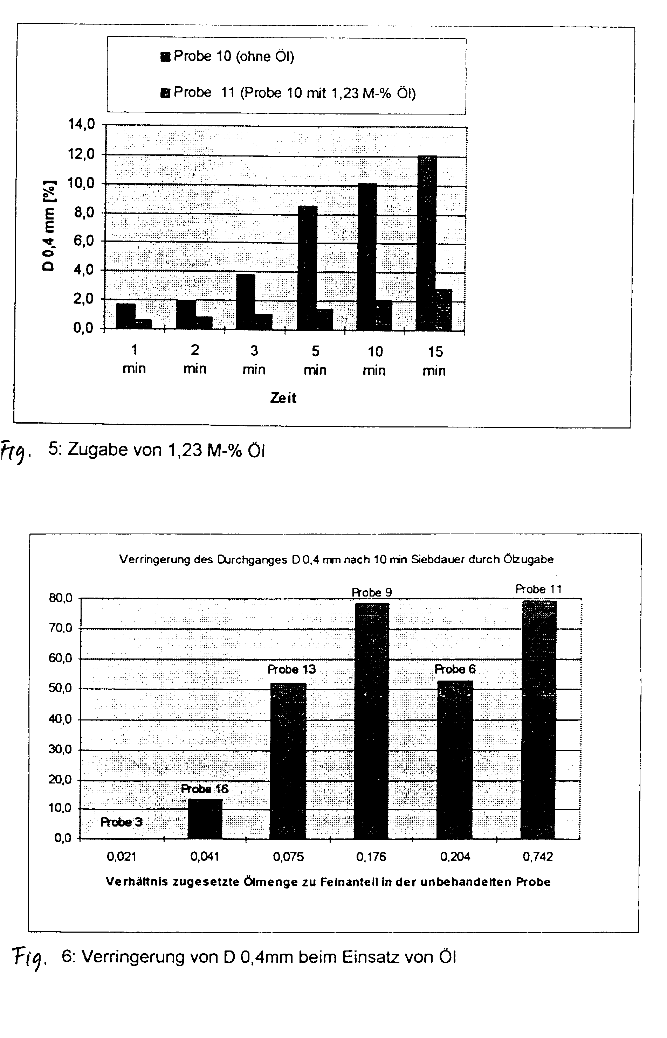

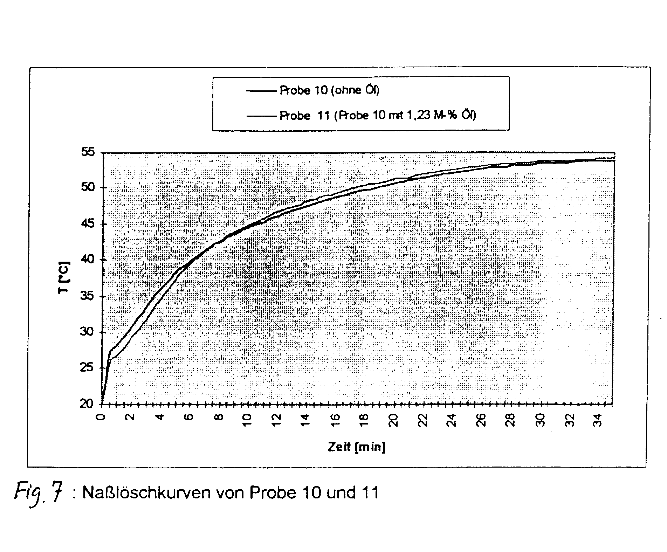

Die Entwicklung des Feinanteils verschiedener Kalkproben mit zunehmender Siebdauer wird anhand der Fig. 1 - 5 erläutert. Diese Figuren betreffen unterschiedliche Kalkproben, die mit unterschiedlichen Ölmengen bis zu 15 min. gesiebt wurden. An den verschiedenen in der Abszisse angegebenen Zeitpunkten (1,2,3,5,10,15 min.) werden die Feinanteile D 0,4 mm (%) aufgetragen. Das Ergebnis für die Zugabe von 0,11 M-% Öl wird in Fig. 1 angegeben. Die Fig. 2 - 5 treffen der Reihe nach die Zugabe von 0,21, 0,45, 0,97 und 1,23 M-% Öl zu der jeweils untersuchten Kalkprobe.

Die Ergebnisse zeigen, daß ein Zusatz von Öl den Siebdurchgang bei 0,4 mm deutlich beeinflußt. Offensichtlich werden Feinanteile an der Oberfläche größerer Körner angebunden bzw. angeklebt, so daß bereits zu Beginn der Siebung weniger Feinteile vorliegen. Auch wird der Abrieb der sich mit zunehmender Siebdauer einstellt, deutlich verringert.

Die Größe dieses "Kleb"-Effekts hängt offensichtlich sowohl von der Menge des eingesetzten Öls als auch von der Höhe des Feinanteils in der unbehandelten Probe ab. Fig. 6 zeigt die durch den Einsatz des Öls bedingte prozentuale Verringerung des Feinanteils der behandelten Branntkalkproben im Verhältnis zu den unbehandelten Branntkalkproben nach 10 min. Siebdauer. Dabei ist auf der Abszisse das Verhältnis der eingesetzten Ölmengen zum Feinanteil der unbehandelten Probe aufgetragen.

Aus Fig. 6 kann abgelesen werden, daß der Einsatz von Öl bei einem Branntkalk mit sehr hohem Feinanteil einen relativ geringen Vorteil bringt. Bei Probe 3 wurden 0,45 M-% Öl eingesetzt, der Branntkalk hatte einen hohen Feinanteil von D 0,4 mm von 21,1 %. Zur Bindung dieser Feinkalkmenge reicht das eingesetzte Öl nicht aus.

### Reaktionsfähigkeit

Die Naßlöschkurven von Branntkalk können durch die Kennwerte t _{*80*} sowie T_{*max*} geschrieben werden. In der nachfolgenden Tabelle werden diese Kennwerte für verschiedene Proben des unbehandelten und des erfindungsgemäß behandelten körnigen Branntkalks aufgeführt.

| **Probe** | **Zusammensetzung** | **t**_{**80**} **[min]** | **T**_{**max**} **[°C]** |
|---|---|---|---|
| 5 | ohne Öl | 11 min 45 | 53,3°C |
| 6 | Probe 5 mit 0,97 M-% Öl | 12 min 30 | 54,4 °C |
| 8 | ohne Öl | 14 min | 56,2 °C |
| 9 | Probe 8 mit 0,45 M-% Öl | 12 min 30 | 56,6°C |
| 10 | ohne Öl | 13 min 30 | 57,3°C |
| 11 | Probe 10 ,it 1,23 M-% Öl | 13 min | 57,5°C |
| 15 | ohne Öl | 12 min 15 | 52,9°C |
| 16 | Probe 15 mit 0,11 M-% Öl | 11 min 45 | 56,2 °C |

Die Tabelle zeigt, daß die erfindungsgemäße Zugabe von pflanzlichem Öl zum körnigen Branntkalk weder eine Verringerung der Umsetzungsgeschwindigkeit noch eine Verminderung der erreichten Endtemperatur zur Folge hat. Bei den zugesetzten geringen Ölanteilen konnte jedenfalls eine Reaktivitätsänderung des Branntkalks nicht beobachtet werden. Beispielhaft ergibt sich das auch aus den in Fig. 7 aufgetragenen Naßlöschkurven für eine Probe 10 (ohne Öl) und eine Probe 11, die durch Zugabe von 1,23 M-% Öl aus der Probe 10 hervorgeht. In Fig. 7 wird in der Abszisse die Zeit in Minuten und in der Ordinate die Temperatur in Grad Celsius angegeben.

## Patentansprüche

1. Körniger Branntkalk,
**gekennzeichnet durch**
ein auf die Oberfläche der Kalkkörner aufgebrachtes pflanzliches Öl.

2. Branntkalk nach Anspruch 1,
**dadurch gekennzeichnet,**
daß als pflanzliches Öl eine Mischung verschiedener natürlicher Öle vorgesehen ist.

3. Branntkalk nach Anspruch 1 oder 2,
**dadurch gekennzeichnet,**
daß als pflanzliches Öl Rapsöl, Leinöl und/oder Sonnenblumenöl vorgesehen ist.

4. Branntkalk nach mindestens einem der Ansprüche 1 - 3,
**gekennzeichnet durch**
einen Ölgehalt von größenordnungsmäßig mindestens etwa 0,1 M-%.

5. Branntkalk nach mindestens einem der Ansprüche 1 - 4,
**gekennzeichnet durch**
einen Ölgehalt von größenordnungsmäßig 0,2 - 2,5 M-% , insbesondere etwa 2,0 M-% Öl.

6. Verfahren zum Herstellen des körnigen Branntkalks nach mindestens einem der Ansprüche 1 - 5,
**dadurch gekennzeichnet,**
daß der Branntkalk mit dem pflanzlichen Öl besprüht wird.

7. Verfahren nach Anspruch 6,
**dadurch gekennzeichnet,**
daß der Branntkalk bei dem Besprühen ständig gemischt wird.
